(19) **Europäisches Patentamt**
**European Patent Office**
**Office européen des brevets**

(11) **EP 2 850 499 B1**

(12) **FASCICULE DE BREVET EUROPEEN**

(45) Date de publication et mention
de la délivrance du brevet:
**23.11.2016 Bulletin 2016/47**

(51) Int Cl.:
***B64D 45/00*** *(2006.01)*  ***G07C 5/08*** *(2006.01)*
***G05B 23/02*** *(2006.01)*

(21) Numéro de dépôt: **13727295.1**

(22) Date de dépôt: **15.05.2013**

(86) Numéro de dépôt international:
**PCT/FR2013/051059**

(87) Numéro de publication internationale:
**WO 2013/171427 (21.11.2013 Gazette 2013/47)**

(54) **PROCÉDÉ DE SURVEILLANCE D'UNE DÉGRADATION D'UN DISPOSITIF EMBARQUE D'UN AÉRONEF AVEC DÉTERMINATION AUTOMATIQUE D'UN SEUIL DE DÉCISION**

VERFAHREN ZUR ÜBERWACHUNG DES VERSCHLEISSES EINER BORDINTERNEN VORRICHTUNG EINES FLUGZEUGS MIT AUTOMATISCHER BESTIMMUNG EINER ENTSCHEIDUNGSSCHWELLE

METHOD FOR MONITORING A DEGRADATION OF AN ON-BOARD DEVICE OF AN AIRCRAFT WITH AUTOMATIC DETERMINATION OF A DECISION THRESHOLD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2012 FR 1254506**

(43) Date de publication de la demande:
**25.03.2015 Bulletin 2015/13**

(73) Titulaire: **Safran Aircraft Engines**
**75015 Paris (FR)**

(72) Inventeurs:
• **MASSE, Jean-Rémi, André**
**F-77550 Moissy-Cramayel Cedex (FR)**

• **BEAUSEROY, Pierre, Jean, Emile**
**F-10000 Troyes (FR)**
• **BOULET, Xavier**
**F-77550 Moissy-cramayel Cedex (FR)**
• **GRALL-MAES, Edith**
**F-10120 Saint-Pouange (FR)**
• **HMAD, Ouadie**
**F-77130 Montereau Fault Yonne (FR)**

(74) Mandataire: **Gevers & Orès**
**9 rue St Antoine du T**
**31000 Toulouse (FR)**

(56) Documents cités:
**EP-A2- 1 677 172    US-A1- 2005 143 873**

**Description**

**DOMAINE TECHNIQUE GENERAL ET ART ANTERIEUR**

La présente invention concerne le domaine de la surveillance d'une dégradation d'un dispositif embarqué d'un aéronef tel que, par exemple, un système de lubrification d'un turboréacteur, un doseur pour l'alimentation en carburant d'un turboréacteur, une chaîne d'acquisition redondée d'un turboréacteur, un filtre à particules, etc.

Pour surveiller un dispositif embarqué, il est connu de former un indicateur qui est caractéristique d'une dégradation du dispositif embarqué. Cet indicateur est connu de l'homme du métier sous la dénomination de score d'anormalité. De manière classique, un score d'anormalité est formé à partir de mesures de paramètres physiques du dispositif embarqué tels que, par exemple, une position géométrique, un courant de commande, un angle d'ouverture, une température, etc. Le score d'anormalité est caractéristique du degré de dommage de la dégradation. De préférence, un score d'anormalité est formé à chaque vol de l'aéronef.

A titre d'exemple, on connaît, par la demande de brevet déposée en France le 5 décembre 2011 sous le numéro 1161175 de la société SNECMA, un procédé de surveillance d'un doseur de carburant d'un turboréacteur dans lequel la dégradation relative à la dérive du courant de repos d'une servovalve commandant le doseur de carburant est surveillée. Pour former le score d'anormalité qui est caractéristique de la dérive du courant de repos de la servovalve, on réalise une pluralité de mesures du courant de commande moyen et on en prend la norme.

Pour déterminer si le dispositif embarqué est effectivement dégradé, le procédé de surveillance comporte une étape de comparaison d'un score d'anormalité obtenu pour un vol donné de l'aéronef à un seuil de décision et une étape d'émission d'une alarme en cas de dépassement du seuil de décision. Ainsi, en suivant l'évolution du score d'anormalité, on détecte si le degré de dégradation augmente et on peut anticiper le risque de panne du dispositif embarqué et améliorer la gestion des opérations de maintenance.

Le réglage du seuil de décision pour une dégradation donnée est crucial étant donné, d'une part, qu'un seuil de décision trop faible induit l'émission d'alarmes fréquentes alors que la dégradation n'est pas avérée (alarme fausse) et, d'autre part, qu'un seuil de décision trop élevé inhibe l'émission d'alarmes alors que la dégradation est avérée (non détection).

De manière classique, pour chaque dégradation que l'on souhaite détecter, on définit de manière empirique la valeur du seuil de décision. Afin d'assurer une sécurité maximale, la valeur des seuils de décision est généralement sous évaluée afin de minimiser le risque de non détection. Il en résulte que le nombre d'alarmes fausses demeure élevé ce qui présente un inconvénient pour les compagnies aériennes qui sont contraintes à mettre en oeuvre de manière fréquente une opération de maintenance alors que le dispositif aéronautique embarqué n'est pas dégradé. Pour éliminer cet inconvénient, les compagnies aériennes imposent aux fabricants de dispositifs embarqués des cahiers des charges imposant de limiter le risque d'erreur. Compte tenu de la précision exigée, toute définition empirique d'un seuil de décision pour un procédé de surveillance de pannes est alors proscrite.

Il existe ainsi un besoin pour déterminer de manière fiable et précise la valeur d'un seuil de décision pour la surveillance d'une dégradation d'un dispositif embarqué d'un aéronef.

EP 1677172 décrit un procédé de surveillance d'une dégradation des composantes d'un aéronef.

**PRESENTATION GENERALE DE L'INVENTION**

L'invention concerne un procédé de surveillance d'une dégradation d'un dispositif embarqué d'un aéronef, mise en oeuvre par un calculateur, le degré de la dégradation du dispositif embarqué étant défini par un score d'anormalité formé à partir de mesures de paramètres physiques du dispositif embarqué, le procédé de surveillance comprenant une étape de comparaison d'un score d'anormalité obtenu pour un vol donné de l'aéronef à un seuil de décision et une étape d'émission d'une alarme en cas de dépassement du seuil de décision, le seuil de décision étant déterminé automatiquement pour une probabilité d'alarme donnée Pa, correspondant à la probabilité qu'une alarme soit émise au cours du procédé de surveillance alors que le dispositif embarqué est sain, au moyen des étapes suivantes :

- une étape de calcul d'une pluralité de scores d'anormalité pour une pluralité de vols de l'aéronef sans dégradation de manière à obtenir une distribution de la densité de probabilité du score d'anormalité, la distribution étant propre à la nature physique du dispositif embarqué ;
- une étape d'ajustement de la distribution par un estimateur non paramétrique de la densité de probabilité de manière à obtenir une fonction de distribution ajustée continue ;
- une étape de calcul d'une fonction de répartition ajustée continue à partir de la fonction de distribution ajustée continue ; et
- une étape de lecture de l'antécédent de la fonction de répartition ajustée continue pour la valeur 1-Pa, l'antécédent correspondant au seuil de décision.

Grâce à l'invention, on détermine le seuil de décision de manière automatique avec une grande précision en fonction de la probabilité d'alarme Pa correspondant aux exigences des compagnies aériennes. Un tel procédé est fiable par comparaison aux procédés selon l'art antérieur ce qui permet de détecter de manière précise toute dégradation d'un dispositif embarqué et d'anticiper toute panne de ce dernier lors de la surveillance.

De manière préférée, l'estimateur non paramétrique de la densité de probabilité est un estimateur par fenêtre de Parzen. Un tel estimateur est très avantageux car il accorde la même importance à la partie centrale de la distribution qu'aux parties extrêmes qui sont les plus critiques pour la surveillance de dégradation dans le domaine aéronautique pour lequel les exigences en termes de fiabilités sont importantes.

De préférence, un estimateur par fenêtre de Parzen est défini par sa largeur de fenêtre h. De manière préférée, la distribution étant formée à partir d'un nombre N de scores d'anormalité pour une pluralité de vols de l'aéronef sans dégradation, la distribution ayant un écart-type estimé $\hat{\sigma}$, la fenêtre de Parzen possède une largeur h définie selon la formule suivante :

$$h = \hat{\sigma} \left( \frac{4}{3 * N} \right)^{1/5}$$

Une telle largeur h de fenêtre de Parzen permet de garantir une précision de l'ajustement pour la surveillance de dispositifs embarqués ce qui garantit une précision du seuil de décision déterminé.

Selon un aspect préféré de l'invention, la probabilité d'alarme Pa est obtenue par la formule suivante :

$$Pa = \frac{Pe}{(1 - Pe)} \cdot (1 - \beta)_{\text{a priori}} \cdot \frac{Pd}{(1 - Pd)}$$

formule dans laquelle :

Pe correspond à la probabilité que le dispositif embarqué soit sain alors qu'une alarme est émise ;
Pd correspond à la probabilité d'une dégradation pour un vol donné ; et
$(1 - \beta)_{\text{a priori}}$ correspond à la probabilité de détection d'une dégradation a priori.

De manière avantageuse, on détermine la probabilité d'alarme Pa en fonction d'une probabilité d'erreur Pe qui correspond aux exigences pratiques des compagnies aériennes qui souhaitent diminuer le nombre d'étapes de maintenance inutiles des dispositifs embarqués.

De préférence encore, le procédé comporte :

- une étape de mise en oeuvre du procédé de surveillance d'une dégradation du dispositif embarqué, avec le seuil de décision préalablement déterminé, pour une pluralité de scores d'anormalité formés pour une pluralité de vols de l'aéronef avec dégradation pour en déduire une probabilité de détection d'une dégradation a posteriori $(1 - \beta)_{\text{a posteriori}}$
- une étape de détermination d'une nouvelle probabilité d'alarme Pa en fonction de la probabilité de détection d'une dégradation a posteriori $(1 - \beta)_{\text{a posteriori}}$ et
- une étape de détermination d'un nouveau seuil de décision affiné à partir de la nouvelle probabilité d'alarme Pa.

Ces étapes permettent avantageusement d'affiner la valeur du seuil de décision de manière rapide et fiable lorsque la probabilité d'alarme Pa est déterminée en fonction d'une probabilité d'erreur Pe.

## PRESENTATION DES FIGURES

L'invention sera mieux comprise à la lecture de la description qui va suivre, donnée uniquement à titre d'exemple, et se référant aux dessins annexés sur lesquels :

- la figure 1 est un diagramme schématique des étapes de détermination automatique du seuil de décision selon l'invention ;
- la figure 2 est un diagramme schématique des étapes de détermination automatique du seuil de décision selon l'invention avec une étape d'affinage du seuil de décision ;
- la figure 3 représente la distribution de scores d'anormalité obtenus pour un calculateur embarqué d'un aéronef pour une pluralité de vols sans dégradation, la courbe représentant un ajustement de la distribution obtenue ;

- la figure 4 représente la fonction de répartition issue de la distribution de la figure 3, la courbe représentant un ajustement de la fonction de répartition ;
- la figure 5 est un diagramme schématique de l'étape d'affinage de la valeur du seuil de décision ;
- la figure 6 est une comparaison de différents types d'ajustements (gaussien, gamma, Parzen) de la fonction de répartition ; et
- la figure 7 est une comparaison de différents seuils de décision obtenus en fonction du type d'ajustement.

Il faut noter que les figures exposent l'invention de manière détaillée pour mettre en oeuvre l'invention, lesdites figures pouvant bien entendu servir à mieux définir l'invention le cas échéant.

## DESCRIPTION D'UN OU PLUSIEURS MODES DE REALISATION ET DE MISE EN OEUVRE

La détermination automatique d'un seuil de décision va être présentée pour un procédé de surveillance d'une dégradation d'un dispositif embarqué d'un aéronef tel que connu de l'art antérieur, par exemple, par la demande de brevet sous le numéro 1161175 de la société SNECMA.

De manière connue, le degré de dégradation du dispositif embarqué est défini par un score d'anormalité obtenu par calcul au moyen de mesures de paramètres physiques du dispositif embarqué tel que présenté précédemment. De manière préférée, le score d'anormalité est formé par un calculateur embarqué de l'aéronef et relié au dispositif embarqué par une liaison de communication. De manière connue, comme présenté précédemment, le procédé de surveillance comprend une étape de comparaison d'un score d'anormalité obtenu pour un vol donné de l'aéronef à un seuil de décision et une étape d'émission d'une alarme en cas de dépassement du seuil de décision.

Lors de l'émission d'une alarme, une étape de maintenance du dispositif embarqué doit être mise en oeuvre par la compagnie aérienne afin d'éviter une panne dudit dispositif embarqué.

Probabilité d'alarme

Le réglage automatique d'un seuil de décision est défini pour une probabilité d'alarme donnée Pa. Par probabilité d'alarme, on entend la probabilité qu'une alarme soit émise au cours du procédé de surveillance alors que le dispositif embarqué est sain, c'est-à-dire, sans dégradation avérée. Autrement dit, une probabilité d'alarme Pa de 1% correspond à l'émission d'une alarme pour 100 vols sans dégradation.

En pratique, la probabilité d'alarme Pa n'est pas directement connue. En effet, les cahiers des charges des compagnies aériennes imposent comme critère une probabilité d'erreur Pe qui correspond à la probabilité que le dispositif embarqué soit sain alors qu'une alarme est émise. Autrement dit, une probabilité d'erreur Pe de 1% correspond à un dispositif embarqué sain pour 100 alarmes émises.

En pratique, lorsqu'une alarme est émise par le procédé de surveillance, une opération de maintenance est mise en oeuvre par la compagnie aérienne. Une limitation de la probabilité d'erreur Pe permet ainsi aux compagnies aériennes de limiter le nombre d'opérations de maintenance d'un dispositif embarqué qui est sain, de telles opérations engendrant des coûts d'exploitation inutiles.

De manière préférée, la probabilité d'alarme Pa est déterminée en fonction de la probabilité d'erreur Pe grâce à la formule de probabilité conditionnelle (F1) ci-dessous.

$$(\text{F1}) \quad Pa \ = \frac{\text{Pe}}{(1 - \text{Pe})} \cdot (1 - \beta)_{\text{a priori}} \cdot \frac{Pd}{(1 - Pd)}$$

La formule (F1) comporte les paramètres suivants :

- $\beta$ correspond à la probabilité de non-détection d'une dégradation pour un vol donné, $1-\beta$ correspondant alors à la probabilité de détection d'une dégradation ; et
- Pd correspond à la probabilité d'une dégradation pour un vol donné.

La formule (F1) se déduit des équations de probabilité conditionnelle dans lesquelles la probabilité Pa correspond à une alarme sachant le dispositif sain (Pa = P(*Alarme|Sain*)) et la probabilité Pe correspond à un dispositif sain sachant qu'une alarme est émise (Pe = P(*Sain|Alarme*)).

$$P(Sain \,|Alarme \,) = \frac{P(Sain \,) \bigcap P(Alarme \,)}{P(Alarme \,)} = \frac{P(Alarme \, \bigcap Sain \,)}{P(Alarme \,)} = \frac{P(Alarme \, \bigcap Sain \,)}{P(Sain \,)} \cdot \frac{P(Sain \,)}{P(Alarme \,)}$$

$$= P(Alarme \,|Sain \,) \cdot \frac{P(Sain \,)}{P(Alarme \,)} = Pa \, \cdot \frac{P(Sain \,)}{P(Alarme \,)}$$

Autrement dit

$$P(Alarme \,) = Pa \, \cdot \frac{P(Sain \,)}{P(Sain \,|Alarme \,)} = Pa \, \cdot \frac{(1 - Pd \,)}{Pe}$$

En outre, comme

$$P(Alarme) = P(Alarme \bigcap Sain) + P(Alarme \bigcap Dégradé)$$

$$P(Alarme) = P(Alarme|Sain).P(Sain) + P(Alarme|Dégradé).P(Dégradé)$$

Avec

$$P(Dégradé) = Pd$$

$$P(Sain) = 1 - Pd$$

$$P(Alarme|Dégradé) = 1 - \beta$$

$$P(Alarme|Sain) = Pa$$

$$P(Sain|Alarme) = Pe$$

$$P(Alarme) = P(Alarme|Sain).P(Sain) + P(Alarme|Dégradé).P(Dégradé)$$

$$P(Alarme \,) = Pa \, \cdot (1 - Pd \,) + (1 - \beta \,) \cdot Pd$$

$$P(Alarme \,) = Pa \, \cdot (1 - Pd \,) + (1 - \beta \,) \cdot Pd$$

Grâce aux deux égalités relatives à P(*Alarme*), on en déduit alors (F1).

Dans la formule (F1), la probabilité d'une dégradation pour un vol donné Pd est connue par expérimentation ou estimation et peut, par exemple, être de l'ordre de $10^{-7}$ . La probabilité de détection d'une dégradation $(1 - \beta)_{a\ priori}$ est fixée « a priori » à 1 et affinée par itération comme cela sera détaillé par la suite afin d'améliorer la précision du seuil de décision.

A titre d'exemple, on obtient classiquement une probabilité d'alarme Pa de l'ordre de 10E-9 pour une probabilité d'erreur Pe exigée de l'ordre de 1%, une probabilité de détection d'une dégradation $(1 - \beta)_{a\ priori}$ de l'ordre de 1 et une probabilité d'une dégradation pour un vol Pd de l'ordre de $10^{-7}$.

<u>Score d'anormalité, distribution et fonction de répartition</u>

Le dispositif embarqué sur l'aéronef comporte de manière classique une pluralité de capteurs afin de mesurer des paramètres physiques du dispositif embarqué (courant de commande, positions géométriques, températures, etc.). De manière classique, certains des paramètres physiques mesurés sont utilisés pour former un score d'anormalité qui est fonction du degré de dégradation du dispositif embarqué (erreur de positionnement, dérive du courant de commande, surchauffe, etc.). Un score d'anormalité est obtenu par transformation d'une ou plusieurs mesures de paramètres physiques du dispositif embarqué. Par exemple, les mesures obtenues sont normées par valeur absolue ou par la norme de Mahalanobis.

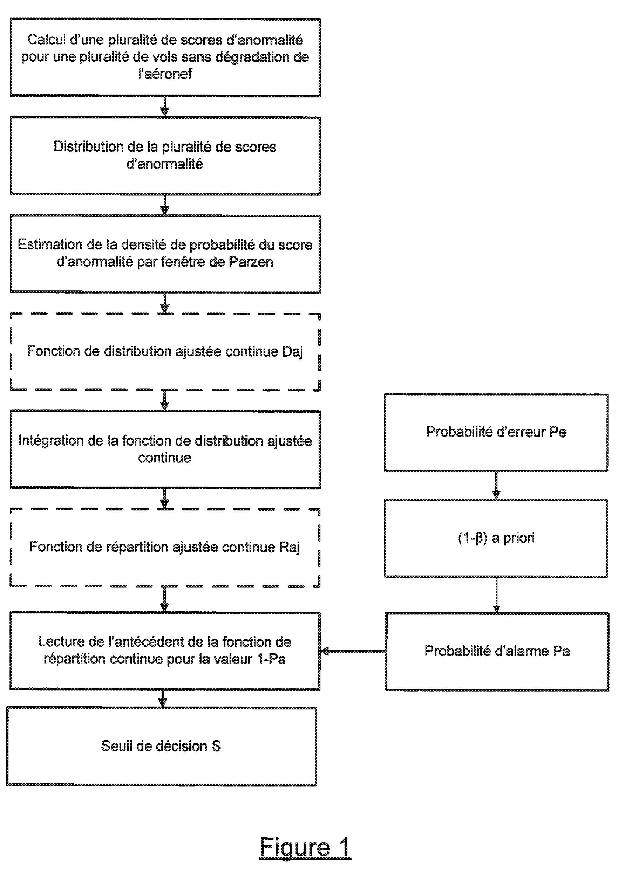

Comme illustré à la figure 1, le procédé selon l'invention comporte une étape de calcul d'une pluralité de scores d'anormalité pour une pluralité de vols de l'aéronef sans dégradation. Pour des vols de l'aéronef pour lequel le dispositif embarqué est sain, on calcul une pluralité de scores d'anormalité de manière classique à partir de mesures de paramètres physiques du dispositif embarqué réalisées au cours de chaque vol de l'aéronef. Les valeurs des scores d'anormalité varient en fonction des vols de l'aéronef et de la nature physique du dispositif embarqué.

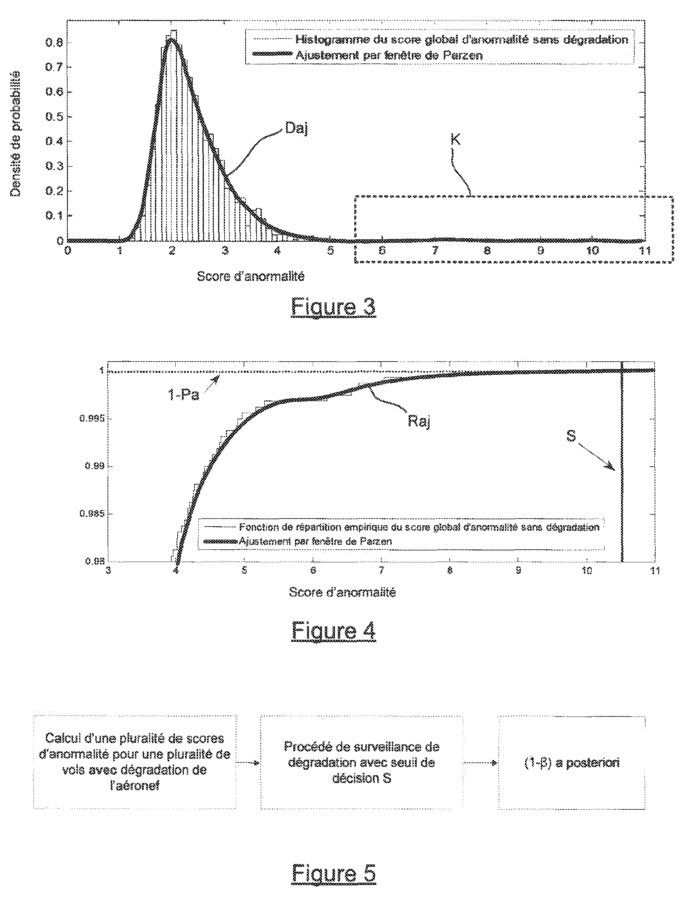

La distribution de la densité de probabilité du score d'anormalité est représentée sur la figure 3 par un histogramme. Comme illustré sur cette figure, un score d'anormalité égal à 2 est le plus probable (densité de probabilité de 0.8). Plus le nombre de scores d'anormalité est élevé, plus la distribution est précise. Malheureusement, un nombre élevé de scores d'anormalité requiert un grand nombre de vols d'aéronef ce qui n'est pas souhaité. Dans cet exemple, les scores d'anormalité ont été obtenus sur 200 à 500 vols.

La probabilité d'alarme Pa, qui pour rappel correspond à la probabilité qu'une alarme soit émise au cours du procédé de surveillance alors que le dispositif embarqué est sain, est classiquement de l'ordre de 10E-9. Autrement dit, le seuil de décision S conforme à la probabilité d'alarme Pa est une valeur de score d'anormalité au-dessus duquel sont 10E-9 des scores d'anormalité obtenus pour des vols sans dégradation.

Même si l'on dispose d'un très grand nombre de scores d'anormalité, la distribution de la figure 3 n'est pas précise pour les quantiles de faible valeur, par exemple, pour un quantile de 10E-9. Par analyse graphique, on peut uniquement déduire que la valeur du seuil de décision S est supérieure à 5,5 et doit être située dans la fenêtre K représentée à la figure 3. En effet, la distribution est obtenue au moyen de valeurs discrètes de scores d'anormalité ce qui limite la précision de la distribution.

<u>Ajustement de la fonction de distribution</u>

Afin d'améliorer l'interprétation de la distribution, en référence à la figure 1, le procédé selon l'invention comporte une étape d'ajustement de la distribution par un estimateur de la densité de probabilité de manière à obtenir une fonction de distribution ajustée continue Daj représentée sur la figure 3. Selon l'invention, une étape d'ajustement de la fonction de distribution par fenêtre de Parzen permet d'approcher de manière précise la fonction de répartition obtenue de manière discrète.

Cette approche non paramétrique permet d'obtenir un ajustement proche de la distribution car un ajustement par fenêtre de Parzen accorde de manière avantageuse un même poids aux queues de la distribution qu'à la partie centrale ce qui permet d'interpréter de manière précise les quantiles extrêmes.

Pour rappel, l'ajustement par fenêtre Parzen est un ajustement non paramétrique pour estimer la densité de probabilité d'une variable aléatoire. Il est communément nommé estimation par noyau de la densité, parce que des fonctions dites « noyaux » sont utilisées pour estimer la densité de probabilité d'une variable aléatoire. L'expression analytique de la densité de probabilité de Parzen est :

$$\hat{f}_h(x) = \frac{1}{N*h} \sum_{i=1}^{N} K\left(\frac{x - x_i}{h}\right)$$

Avec K et h, respectivement, la fonction noyau et la largeur ou profondeur de la fenêtre de Parzen.

Le concept de l'ajustement par fenêtre de Parzen est d'estimer la densité de probabilité d'une variable aléatoire pour chaque valeur de x grâce à une fonction noyau K() qui est la plupart du temps une fonction de densité de probabilité. Plus l'observation x est proche des échantillons d'apprentissages xi plus la contribution de x dans la fonction noyau $\hat{f}_h(x)$ centré sur xi est importante. Inversement, moins l'observation x est proche des échantillons d'apprentissages xi plus la contribution de x dans la fonction noyau $\hat{f}_h(x)$ centré sur xi est négligeable. Ensuite, l'estimateur de la fonction de densité de probabilité est formé par une moyenne des valeurs des fonctions de noyau. Cet estimateur est régi par un paramètre de lissage « h » qui est nommé largeur ou profondeur de la fenêtre. L'estimation de densité de probabilité, qui dépend du paramètre de lissage « h », présente de bonnes propriétés statistiques. Sous certaines conditions non contraignantes sur « h », l'estimateur de fenêtre de Parzen est consistent.

Il existe plusieurs fonctions noyaux (gaussien, box, triangle...) mais la performance de la fenêtre de Parzen repose principalement sur le choix de la largeur ou profondeur de fenêtre « h ». Un compromis entre le biais et la variance de l'estimateur doit être effectué pour choisir la largeur « h ».

La largeur de la fenêtre peut être choisie par validation croisée, en maximisant la probabilité de la fonction du noyau. Dans cet exemple, un noyau gaussien (F2) a été utilisé. Quant à la largeur ou profondeur de la fenêtre, elle repose sur une estimation de l'écart-type $\hat{\sigma}$ et de la taille N de l'ensemble des données d'apprentissage selon la formule (F3).

$$(F2) \quad K(x) = \frac{e^{(-0.5x^2)}}{\sqrt{2\pi}}$$

$$(F3) \quad h = \hat{\sigma} \left( \frac{4}{3 * N} \right)^{1/5}$$

Un ajustement de Parzen est très proche de la distribution élémentaire observée pour quelques vols comme cela sera présenté par la suite ce qui en fait un ajustement optimal par comparaison aux autres ajustements connus.

Contrairement à la distribution discrète obtenue précédemment, la fonction de distribution ajustée Daj est continue ce qui permet de connaître de manière fiable la densité de probabilité du score d'anormalité pour tout score d'anormalité. Cela est très avantageux pour des quantiles de faible valeur pour lesquels les données collectées sont très peu nombreuses.

Fonction de répartition ajustée

Pour déterminer la valeur du seuil de décision S de manière simple et rapide, la fonction de distribution ajustée Daj est intégrée de manière classique pour obtenir une fonction de répartition ajustée Raj qui est également continue.

La fonction de répartition ajustée Raj de la fonction de distribution ajustée Daj de la figure 3 est représentée sur la figure 4. Pour mémoire, une fonction de répartition F d'une variable aléatoire réelle X est la fonction $F_X$ qui à tout réel x associe $F_X(x)$ = P(X ≤ x). En référence à la figure 4, la fonction de répartition possède une valeur de 99% pour un score d'anormalité de 4,5. Ce qui signifie que 99% des scores d'anormalité pour un dispositif sain sont inférieurs à 4,5.

Aussi, pour respecter le critère de probabilité d'alarme Pa de l'ordre de 10E-9, il faut lire avec précision l'antécédent de la fonction de répartition ajustée Raj pour laquelle celle-ci est égale à 1-Pa, l'antécédent correspondant au seuil de décision recherché S. En effet, cela signifie que 1-10E-9 des scores d'anormalité pour un dispositif sain sont inférieurs au seuil de décision S. Autrement dit, 10E-9 des scores d'anormalité pour un dispositif sain qui peuvent générer une alarme sont supérieurs au seuil de décision S. L'antécédent correspond au seuil de décision S recherché pour la probabilité d'alarme Pa déterminée.

Détermination du seuil de décision

En référence à la figure 1, le procédé selon l'invention comporte une étape de lecture de l'antécédent de la fonction de répartition ajustée Raj pour la valeur 1-Pa. De manière avantageuse, la fonction de répartition ajustée Raj étant continue et bijective, on peut déduire de manière très précise pour quel antécédent la fonction de répartition ajustée Raj prend la valeur 1-Pa, c'est-à-dire, le seuil de décision S qui est ici égale à 10,5 comme illustré à la figure 3.

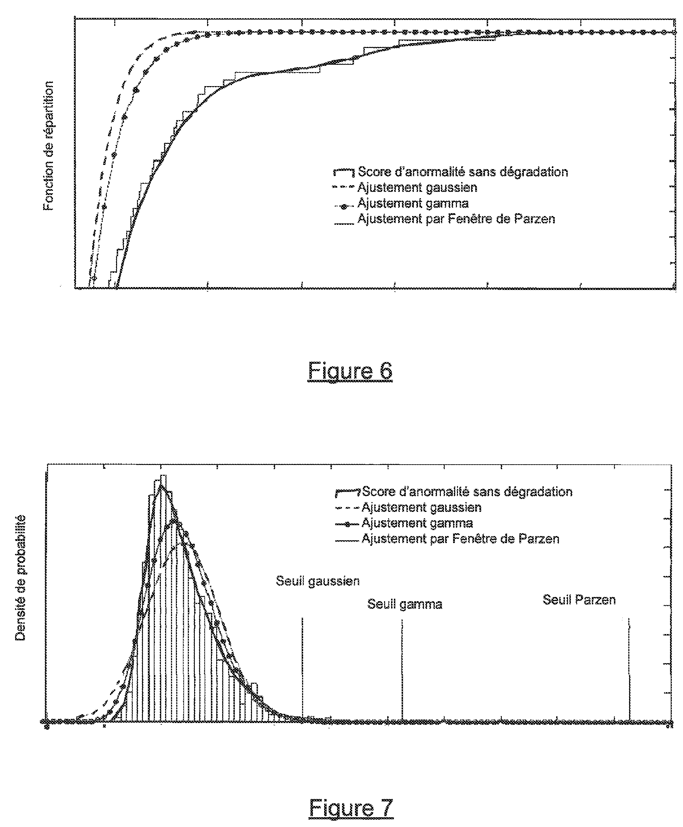

A titre d'information, il a été représenté sur la figure 6 une comparaison de plusieurs types d'ajustements de la fonction de répartition (ajustement gaussien, ajustement gamma et ajustement de Parzen). Comme représenté sur la figure 6, l'ajustement par la méthode de Parzen est très proche des valeurs de score d'anormalité obtenues pour quelques vols. De manière classique, pour valider la qualité d'un ajustement, on met un oeuvre un test de pertinence de l'ajustement connu de l'homme du métier sous la désignation de test de « Kolmogorov-Smirnov ». Dans le cas présent, seul l'ajustement de Parzen passe le test de Kolmogorov-Smirnov, les autres ajustements étant rejetés.

Cette précision de l'ajustement par fenêtre de Parzen se traduit par une précision de détermination du seuil de décision. En effet, comme illustré à la figure 7, on obtient un seuil de décision de 6,5 avec un ajustement gaussien, un seuil de décision de 8,2 avec un ajustement gamma et un seuil de décision de 10,5 avec un ajustement par fenêtre de Parzen.

Affinage de la valeur du seuil de décision

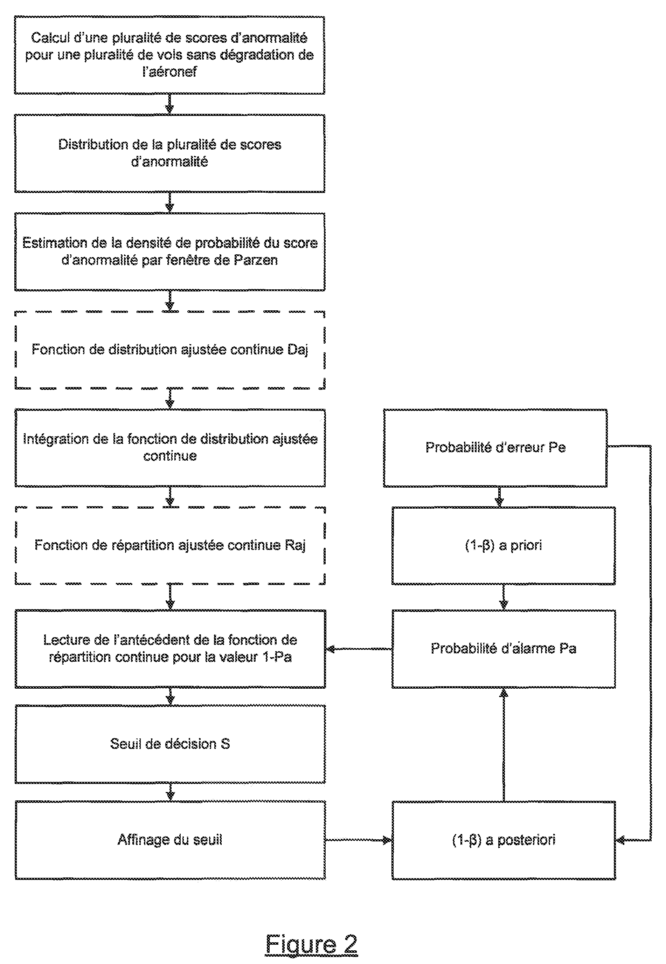

Il a été précédemment présenté une détermination du seuil de décision dans lequel la probabilité d'alarme Pa est connue ou estimée à partir de la probabilité d'erreur Pe. Lorsque la probabilité d'alarme Pa est estimée, on peut mettre en oeuvre de manière optionnelle une étape d'affinage du seuil de décision S par affinage de la probabilité de détection d'une dégradation $(1 - \beta)$ comme illustré sur les diagrammes schématiques des figures 2 et 5.

Comme illustré à la figure 2, on met en oeuvre le procédé de surveillance avec le seuil de décision S tel que précédemment déterminé pour une pluralité de scores d'anormalité obtenus lors de vols avec dégradation, de préférence, obtenus par simulation. Au cours du procédé de surveillance, les différents scores d'anormalité sont comparés au seuil de décision S ce qui permet de déduire « a posteriori » la probabilité de détection d'une dégradation $(1 - \beta)$. En effet, il suffit d'observer le nombre d'alarmes émises par rapport au nombre de vols avec dégradation surveillés.

Comme illustré à la figure 2, par itération, on remplace dans les étapes de détermination du seuil de décision la valeur $(1 - \beta)_{a\ priori}$ par la valeur $(1 - \beta)_{a\ posteriori}$ obtenue au cours de l'affinage afin d'obtenir une nouvelle valeur du seuil de décision S plus précise. L'étape d'affinage peut être itérée afin de converger vers la valeur du seuil de décision S la plus précise.

Dans une mise en oeuvre de l'invention, le procédé de surveillance d'une dégradation d'un dispositif embarqué d'un aéronef, la méthode de détermination automatique d'un seuil de décision et le procédé de génération de dégradations sont mis en oeuvre par un calculateur, de préférence, par une pluralité de processeurs du calculateur.

A titre d'exemple, le procédé de surveillance est mis en oeuvre pour surveiller un doseur de carburant d'un turboréacteur d'aéronef.

Le processeur de détermination du seuil de décision reçoit une pluralité de scores d'anormalité sans dégradation du processeur de surveillance et détermine, pour une probabilité d'erreur donnée Pe et une probabilité de détection « a priori » d'une dégradation par le procédé de surveillance, le seuil de décision S. Une fois le seuil de décision S déterminé, celui-ci est transmis au processeur de surveillance qui peut alors comparer les scores d'anormalité calculés audit seuil de décision S pour surveiller l'évolution de la dégradation du doseur de carburant au fur et à mesure des vols de l'aéronef.

Pour affiner la valeur du seuil de décision S, le processeur de génération de dégradations simule des données de vol dégradées qui sont soumises au processeur de surveillance qui émet un certain nombre d'alarmes en fonction des données reçues ce qui permet d'en déduire « a posteriori » la probabilité de détection d'une dégradation par le procédé de surveillance. Cette valeur est alors communiquée au processeur de détermination du seuil de décision S qui fournit une nouvelle valeur de seuil de décision S pour la nouvelle probabilité de détection obtenue.

On itère le processus jusqu'à obtenir une convergence de la valeur du seuil de décision S. En pratique, une convergence satisfaisante est obtenue à partir de deux itérations.

L'invention a été présentée pour un doseur de carburant mais elle s'applique à tout dispositif embarqué d'un aéronef.

**Revendications**

**1.** Procédé de surveillance d'une dégradation d'un dispositif embarqué d'un aéronef, mise en oeuvre par un calculateur, le degré de la dégradation du dispositif embarqué étant défini par un score d'anormalité formé à partir de mesures de paramètres physiques du dispositif embarqué, le procédé de surveillance comprenant une étape de comparaison d'un score d'anormalité obtenu pour un vol donné de l'aéronef à un seuil de décision (S) et une étape d'émission d'une alarme en cas de dépassement du seuil de décision (S), le seuil de décision (S) étant déterminé automatiquement pour une probabilité d'alarme donnée Pa, correspondant à la probabilité qu'une alarme soit émise au cours du procédé de surveillance alors que le dispositif embarqué est sain, au moyen des étapes suivantes :

- une étape de calcul d'une pluralité de scores d'anormalité pour une pluralité de vols de l'aéronef sans dégradation de manière à obtenir une distribution de la densité de probabilité du score d'anormalité, la distribution étant propre à la nature physique du dispositif embarqué ;
- une étape d'ajustement de la distribution par un estimateur non paramétrique de la densité de probabilité de manière à obtenir une fonction de distribution ajustée continue ;
- une étape de calcul d'une fonction de répartition ajustée continue à partir de la fonction de distribution ajustée continue ; et
- une étape de lecture de l'antécédent de la fonction de répartition ajustée continue pour la valeur 1-Pa, l'antécédent correspondant au seuil de décision (S).

**2.** Procédé selon la revendication 1, dans lequel l'estimateur non paramétrique de la densité de probabilité est un estimateur par fenêtre de Parzen.

**3.** Procédé selon la revendication 2, dans lequel la distribution étant formée à partir d'un nombre N de scores d'anormalité pour une pluralité de vols de l'aéronef sans dégradation, la distribution ayant un écart-type estimé $\hat{\sigma}$, la fenêtre de Parzen possède une largeur h définie selon la formule suivante :

$$h = \hat{\sigma} \left( \frac{4}{3 * N} \right)^{1/5}$$

**4.** Procédé selon l'une des revendications 1 à 3, dans lequel la probabilité d'alarme Pa est obtenue par la formule suivante :

$$Pa = \frac{Pe}{(1 - Pe)} \cdot (1 - \beta)_{a\ priori} \cdot \frac{Pd}{(1 - Pd)}$$

dans laquelle :

Pe correspond à la probabilité que le dispositif embarqué soit sain alors qu'une alarme est émise ;
Pd correspond à la probabilité d'une dégradation pour un vol donné ; et
$(1 - \beta)_{a\ priori}$ correspond à la probabilité de détection d'une dégradation a priori.

**5.** Procédé selon la revendication 4 comprenant :

- une étape de mise en oeuvre du procédé de surveillance d'une dégradation du dispositif embarqué, avec le seuil de décision (S) préalablement déterminé, pour une pluralité de scores d'anormalité formés pour une pluralité de vols de l'aéronef avec dégradation pour en déduire une probabilité de détection d'une dégradation a posteriori $(1 - \beta)_{a\ posteriori}$
- une étape de détermination d'une nouvelle probabilité d'alarme Pa en fonction de la probabilité de détection d'une dégradation a posteriori $(1 - \beta)_{a\ posteriori}$ et
- une étape de détermination d'un nouveau seuil de décision (S) affiné à partir de la nouvelle probabilité d'alarme Pa.

**Patentansprüche**

**1.** Verfahren zur Überwachung auf eine Funktionsminderung einer Bordvorrichtung eines Flugzeugs, wobei das Verfahren von einem Rechner umgesetzt wird, wobei der Grad der Funktionsminderung der Bordvorrichtung von einer Abweichungsbewertung definiert wird, die aus Messungen von physikalischen Parametern der Bordvorrichtung gebildet wird, wobei das Überwachungsverfahren einen Schritt des Vergleichens einer für einen gegebenen Flug des Flugzeugs erhaltenen Abweichungsbewertung mit einem Entscheidungsgrenzwert (S) und einen Schritt des Abgebens eines Alarms im Fall einer Überschreitung des Entscheidungsgrenzwerts (S), wobei der Entscheidungsgrenzwert (S) für eine gegebene Alarmwahrscheinlichkeit Pa automatisch bestimmt wird, die der Wahrscheinlichkeit entspricht, dass ein Alarm im Laufe des Überwachungsverfahrens abgegeben wird, obwohl die Bordvorrichtung unversehrt ist, mittels der folgenden Schritte:

- einen Schritt des Berechnens mehrerer Abweichungsbewertungen für mehrere Flüge des Flugzeugs ohne Funktionsminderung, um eine Verteilung der Wahrscheinlichkeitsdichte der Abweichungsbewertung zu erhalten, wobei die Verteilung der physikalischen Beschaffenheit der Bordvorrichtung eigen ist;
- einen Schritt des Justierens der Verteilung durch einen nichtparametrischen Schätzer der Wahrscheinlichkeitsdichte, um eine kontinuierliche justierte Verteilungsfunktion zu erhalten;
- einen Schritt des Berechnens einer kontinuierlichen justierten Aufteilungsfunktion aus der kontinuierlichen justierten Verteilungsfunktion und
- einen Schritt des Lesens des Vorgängers der kontinuierlichen justierten Aufteilungsfunktion für den Wert 1-Pa, wobei der Vorgänger dem Entscheidungsgrenzwert (S) entspricht.

**2.** Verfahren gemäß Anspruch 1, bei dem der nichtparametrische Schätzer der Wahrscheinlichkeitsdichte ein Parzen-Fenster- Schätzer ist.

**3.** Verfahren gemäß Anspruch 2, bei dem die Verteilung aus einer Anzahl N von Abweichungsbewertungen für mehrere Flüge des Flugzeugs ohne Funktionsminderung gebildet wird, wobei die Verteilung eine geschätzte Standardabweichung $\hat{\sigma}$ hat, wobei das Parzen-Fenster über eine Breite h verfügt, die gemäß der folgenden Formel definiert ist:

$$h = \hat{\sigma}\left(\frac{4}{3 * N}\right)^{1/5}$$

**4.** Verfahren gemäß einem der Ansprüche 1 bis 3, bei dem die Alarmwahrscheinlichkeit Pa durch die folgende Formel erhalten wird:

$$Pa = \frac{Pe}{(1-Pe)} \cdot (1-\beta)_{apriori} \cdot \frac{Pd}{(1-Pd)},$$

bei der:

Pe der Wahrscheinlichkeit entspricht, dass die Bordvorrichtung unversehrt ist, obwohl ein Alarm abgegeben wird;
Pd der Wahrscheinlichkeit einer Funktionsminderung für einen gegebenen Flug entspricht und
$(1-\beta)_{a\ priori}$ der Wahrscheinlichkeit einer Erkennung einer Funktionsminderung a priori entspricht.

**5.** Verfahren gemäß Anspruch 4, umfassend:

- einen Schritt des Umsetzens des Verfahrens zur Überwachung auf eine Funktionsminderung der Bordvorrichtung, wobei der Entscheidungsgrenzwert (S) vorab bestimmt wurde, für mehrere Abweichungsbewertungen, die für mehrere Flüge des Flugzeugs mit Funktionsminderung gebildet wurden, um eine Wahrscheinlichkeit einer Erkennung einer Funktionsminderung a posteriori $(1-\beta)_{a\ posteriori}$ davon abzuleiten;
- einen Schritt des Bestimmens einer neuen Alarmwahrscheinlichkeit Pa in Abhängigkeit von der Wahrscheinlichkeit einer Erkennung einer Funktionsminderung a posteriori $(1-\beta)_{a\ posteriori}$ und
- einen Schritt des Bestimmens eines neuen, verfeinerten Entscheidungsgrenzwerts (S) aus der neuen Alarmwahrscheinlichkeit Pa.

**Claims**

**1.** Method for monitoring a degradation of an on-board device of an aircraft, implemented by a computer, the degree of the degradation of the on-board device being defined by an abnormality score from measurements of physical parameters of the on-board device, the monitoring method including a step of comparing an abnormality score obtained for a given flight of the aircraft to a decision threshold (S) and a step of emitting an alarm when the decision threshold (S) is exceeded, the decision threshold (S) being determined automatically for a given alarm probability Pa, corresponding to the probability of an alarm being emitted during the monitoring method when the on-board device is undamaged, by means of the following steps:

- a step of calculating a plurality of abnormality scores for a plurality of flights of the aircraft without degradation so as to obtain a distribution of the probability density of the abnormality score, the distribution being specific to the physical nature of the on-board device;
- a step of adjusting the distribution using a non-parametric estimator of the probability density so as to obtain a continuous adjusted distribution function;
- a step of calculating a continuous adjusted allocation function from the continuous adjusted distribution function; and
- a step of reading the precedent of the continuous adjusted allocation function for the value 1-Pa, the precedent corresponding to the decision threshold (S).

**2.** Method according to claim 1, wherein the non-parametric estimator of the probability density is a Parzen window estimator.

3. Method according to claim 2, wherein, the distribution being formed from a number N of abnormality scores for a plurality of flights of the aircraft without degradation, the distribution having an estimated standard deviation $\hat{\sigma}$, the Parzen window has a width h defined according to the following formula:

$$h = \hat{\sigma}\left(\frac{4}{3*N}\right)^{1/5}$$

4. Method according to any of claims 1 to 3, wherein the alarm probability Pa is obtained using the following formula:

$$Pa = \frac{Pe}{(1-Pe)} \cdot (1-\beta)_{a\ priori} \cdot \frac{Pd}{(1-Pd)}$$

in which:

Pe corresponds to the probability of the on-board device being undamaged when an alarm is emitted;
Pd corresponds to the probability of a degradation for a given flight; and
$(1 - \beta)_{a\ priori}$ corresponds to the probability of detecting a degradation *a priori.*

5. Method according to claim 4 including:

- a step of implementing the method for monitoring a degradation of the on-board device, with the decision threshold (S) determined in advance, for a plurality of abnormality scores formed for a plurality of flights of the aircraft with degradation in order to deduce therefrom a probability of detecting a degradation *a posteriori* $(1 - \beta)_{a\ posteriori}$
- a step of determining a new alarm probability Pa on the basis of the probability of detecting a degradation a posteriori $(1 - \beta)_{a\ posteriori}$ and
- a step of determining a new, refined decision threshold (S) from the new alarm probability Pa.

Calcul d'une pluralité de scores d'anormalité pour une pluralité de vols sans dégradation de l'aéronef

Distribution de la pluralité de scores d'anormalité

Estimation de la densité de probabilité du score d'anormalité par fenêtre de Parzen

Fonction de distribution ajustée continue Daj

Intégration de la fonction de distribution ajustée continue

Probabilité d'erreur Pe

Fonction de répartition ajustée continue Raj

$(1-\beta)$ a priori

Lecture de l'antécédent de la fonction de répartition continue pour la valeur 1-Pa

Probabilité d'alarme Pa

Seuil de décision S

Figure 1

Figure 2

Figure 3

Figure 4

Figure 5

EP 2 850 499 B1

Figure 6

Figure 7

15

**EP 2 850 499 B1**

## RÉFÉRENCES CITÉES DANS LA DESCRIPTION

**Documents brevets cités dans la description**

- FR 1161175

- EP 1677172 A